# EUROPÄISCHE PATENTANMELDUNG

(11) **EP 1 944 197 A2**
(43) Veröffentlichungstag der Anmeldung: **16.07.2008**
(21) Anmeldenummer: 07010845.1
(22) Anmeldetag: 01.06.2007
(51) Int. Cl.: B60R 13/08

(54) **Schallabsorbierendes Hitzeschild**

(30) Priorität: 12.01.2007 DE 102007001947
(71) Anmelder: Lydall Gerhardi GmbH & Co.KG, 58540 Meinerzhagen (DE)
(72) Erfinder: Slimko, Gregory, 44500 La Baule (FR)
(74) Vertreter: Kötter, Ulrich

(57) **Zusammenfassung**

Die Erfindung betrifft ein schallabsorbierendes Hitzeschild, umfassend wenigstens zwei Vliesmatten (2, 3), zwischen denen eine Metallfolie (1) angeordnet ist, wobei die Vliesmatten (2, 3) mit der Metallfolie (1) durch einen Nadelprozess miteinander verbunden sind.

## Beschreibung

Die Erfindung betrifft ein schallabsorbierendes Hitzeschild nach dem Patentanspruch 1.

Derartige Hitzeschilde finden insbesondere in der Automobilindustrie Verwendung, um beispielsweise die Abgasleitungen eines Fahrzeugs zu verkleiden. Solchen Verkleidungen kommt eine große Bedeutung zu, da einerseits bei der üblichen Verwendung von Katalysatoren die Temperatur der Abgase und damit auch die Temperatur der Auspuffrohre stark erhöht ist und andererseits die Grenzwerte für den Geräuschpegel eines Fahrzeugs zunehmend tiefer anzusetzen sind.

Derzeit bekannte schallabsorbierende Hitzeschilde lassen sich in zwei Kategorien einteilen: "Multilayerabsorber" sind aus mehreren hintereinander angeordneten Folien gebildet, zwischen denen schmale Luftspalte angeordnet sind. Diese Absorber haben auf Grund ihrer geringen Dicke nur eine geringe schallabsorbierende Wirkung. Die sogenannten "Tuned Resonant Absorber" bestehen im Wesentlichen aus einem perforierten Trägerblech, hinter dem eine Schicht, bestehend aus porösem Medium, angeordnet ist. Zwischen dem Trägerblech und dem porösen Medium ist ein Luftspalt angeordnet.

Nachteilig an den vorbekannten schallabsorbierenden Hitzeschilden ist, dass sie in ihrer Herstellung sehr aufwendig sind. Die Handhabung der einzelnen Schichten bei der Herstellung sowie beim Zusammenbau erweist sich als aufwendig.

Hier will die Erfindung Abhilfe schaffen. Der Erfindung liegt die Aufgabe zu Grunde, ein schallabsorbierendes Hitzeschild zu schaffen, dass eine hohe schall- und hitzeabsorbierende Wirkung aufweist und dessen Herstellung und Handhabung erleichtert ist. Gemäß der Erfindung wird diese Aufgabe durch die Merkmale des kennzeichnenden Teils des Patentanspruchs 1 gelöst.

Mit der Erfindung ist ein schallabsorbierendes Hitzeschild geschaffen, dass eine hohe schall- und hitzeabsorbierende Wirkung aufweist und dessen Herstellung und Handhabung erleichtert ist.

In Weiterbildung der Erfindung ist wenigstens eine Vliesmatte aus mineralischen Fasern hergestellt. Mineralische Fasern, insbesondere Glasfasern haben gute schallabsorbierende Eigenschaften, wodurch eine hohe schallabsorbierende Wirkung erzielt ist.

In Ausgestaltung der Erfindung ist die Metallfolie eine Aluminiumfolie. Hierdurch ist ein geringes Gewicht, verbunden mit einer hohen hitzeabschirmenden Wirkung erzielt.

In weiterer Ausgestaltung der Erfindung weist die Perforation der Metallfolie eine definierte Anordnung mit einer spezifischen schallabsorbierenden Charakteristik auf, im Wesentlichen bestimmt durch die Geometrie der einzelnen Löcher, die Lochdichte sowie das Perforationsmuster. Durch die definierte Anordnung der Perforationen ist die Anpassung des Hitzeschilds an unterschiedliche Anforderungen ermöglicht.

In Weiterbildung der Erfindung ist auf der durch einen Nadelprozess gebildeten Verbundmatte eine Deckfolie angeordnet. Hierdurch ist die Verbundmatte gegenüber äußeren Einwirkungen geschützt.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:

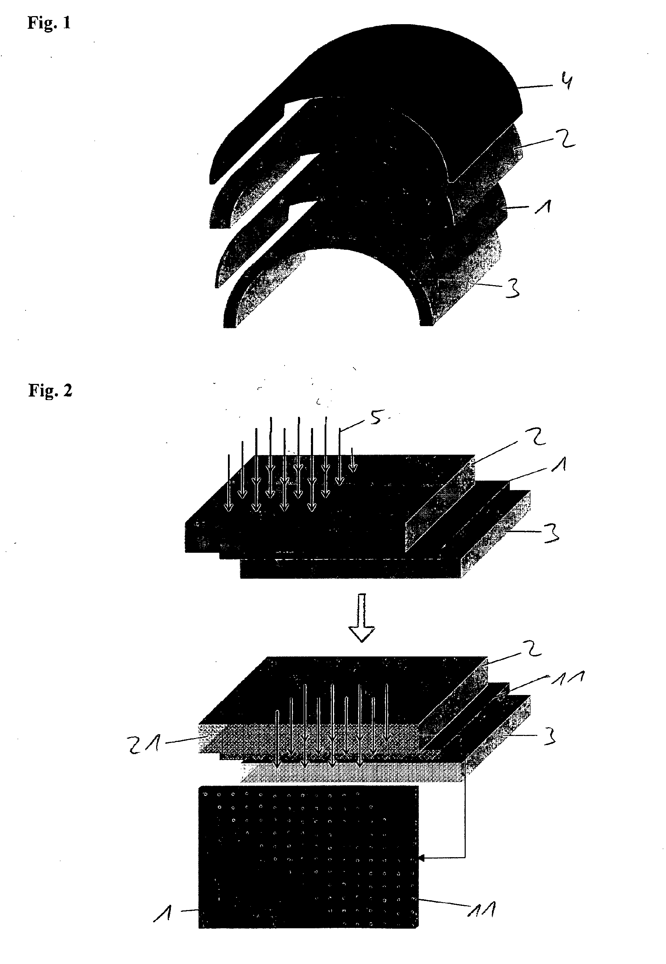

- Fig. 1: Die Darstellung eines schallabsorbierenden Hitzeschildes in Explosionsdarstellung und
- Fig. 2: die schematische Darstellung des Verfahrens zur Herstellung eines schallabsorbierenden Hitzeschildes.

Das als'Ausführungsbeispiel gewählte Hitzeschild besteht im Wesentlichen aus einer Aluminiumfolie 1, an deren Ober- und Unterseite jeweils ein Glasvlies 2, 3 angeordnet ist. Weiterhin ist eine Deckfolie 4 oberhalb des auf der Aluminiumfolie 1 angeordneten Glasvlies 2 positioniert.

Die Glasvliesmatten 2, 3 sind mit der Aluminiumfolie 1 durch einen Nadelprozess miteinander verbunden, wodurch in die Aluminiumfolie 1 Perforationen 11 eingebracht sind und Vliesfasern 21 des Glasvlies 2 durch die Perforationen 11 in das unterhalb der Aluminiumfolie 1 angeordnete Glasvlies 3 geführt sind. Hierdurch sind die Glasvliesmatten 2, 3 mit der zwischen diesen angeordneten Aluminiumfolie 1 zu einer Verbundmatte miteinander verbunden. Durch den Nadelprozess wird die Materialdicke der Glasvliesmatten 2, 3 komprimiert. Durch die durch die Aluminiumfolie 1 gebildete Zwischenschicht wird die Isolierungswirkung des Materials erhöht. Diese Verbundmatte ist an ihrer Oberseite mit einer Deckfolie 4 versehen. Im Ausführungsbeispiel ist die Deckfolie 4 eine Aluminiumfolie.

Die Glasvliesmatten 2, 3 des Hitzeschildes sind derart ausgeführt, dass sie nur eine geringe thermische Leitfähigkeit aufweisen. Die innere Aluminiumfolie 1 hat nur ein geringes Emissionsvermögen sowie eine hohe Leitfähigkeit. Sie reflektiert Infrarotstrahlung und transferiert Wärmeenergie von Hochtemperaturzonen in kältere Zonen. Die äußere Deckschicht 4 ist eine Aluminiumfolie mit geringem Emissionsvermögen und begrenzt so die Intensität der Infrarotstrahlung, die von dem Hitzeschild emittiert wird. Die durch die Aluminiumfolie 1 gebildete Zwischenschicht trägt dazu bei, die Wärmekonvektion zu begrenzen.

Die akustische Wirkung des Hitzeschildes wird durch das Zusammenspiel der Glasvliesmatten 2, 3 mit der Aluminiumfolie 1 bewirkt. Die dem Abgasrohr als Schallquelle zugewandten Glasvliesmatte 3 dient der Absorbtion hoher Schallfrequenzen der Schallquelle. Die Aluminiumfolie 1 sowie die zweite Glasvliesmatte 2 dient der Absorbtion tiefer und mittlerer Schallfrequenzen.

Bei der Herstellung des schallabsorbierenden Hitzeschildes wird im Ausführungsbeispiel eine hochtemperatur E-Glasvliesmatte 3 mit einer Dicke von 5,0 mm unterhalb einer 30 µm starken EN AW-1050-0 Aluminiumfolie 1 angeordnet. Oberhalb dieser Aluminiumfolie 1 wird eine 9,0 mm starke E-Glasvliesmatte 2 positioniert. Die Vliesmatten 2, 3 sowie die Aluminiumfolie 1 werden dabei von Rollen abgewickelt und dem Nadelprozess zur Verbindung der drei Komponenten zugeführt. Während des Nadelprozesses werden die drei Schichten mit Nadeln durchbohrt. Die Zuführgeschwindigkeit der drei Schichten 1, 2, 3 zum Nadelprozess ist dabei proportional zur Perforationsrate, die Nadeldichte (Nadeln pro m²) bestimmt die Perforationsdichte pro m² die in die Aluminiumfolie 1 eingebracht wird. Die so hergestellte Dreischichtverbundmatte wird an einer Deckfolie 4 befestigt, welche die Verbundmatte gegenüber schädlichen Außeneinwirkungen schützt. Die Verbundmatte mit der Deckfolie 4 bildet das Hitzeschild.

## Patentansprüche

1. Schallabsorbierendes Hitzeschild, umfassend wenigstens zwei Vliesmatten (2, 3), zwischen denen eine Metallfolie (1) angeordnet ist, **dadurch gekennzeichnet, dass** die Vliesmatten (2, 3) mit der Folie (1) durch einen Nadelprozess miteinander verbunden sind, so dass Vliesfasern (21) wenigstens einer Vliesmatte (2) durch Perforationen (11) der Metallfolie (1) hindurch in wenigstens eine Vliesmatte (3) jenseits der Metallfolie (1) geführt sind, wodurch eine Verbundmatte gebildet ist.

2. Schallabsorbierendes Hitzeschild nach Anspruch 1, **dadurch gekennzeichnet, dass** wenigstens eine Vliesmatte (2, 3) aus mineralischen Fasern, vorzugsweise Glasfasern hergestellt ist.

3. Schallabsorbierendes Hitzeschild nach einem der Ansprüche 1 und 2, **dadurch gekennzeichnet, dass** die Metallfolie (1) eine Aluminiumfolie ist.

4. Schallabsorbierendes Hitzeschild nach einem der vorgenannten Ansprüche, **dadurch gekennzeichnet, dass** die Perforation (11) der Metallfolie (1) eine definierte Anordnung mit einer spezifischen schallabsorbierenden Charakteristik aufweist, im Wesentlichen bestimmt durch die Geometrie der einzelnen Löcher, die Lochdichte sowie das Perforationsmuster.

5. Schallabsorbierendes Hitzeschild nach einem der vorgenannten Ansprüche, **dadurch gekennzeichnet, dass** auf der durch einen Nadelprozess gebildeten Verbundmatte eine Deckfolie (4) angeordnet ist.
